# EUROPÄISCHE PATENTSCHRIFT

(11) **EP 1 373 772 B1**
(45) Veröffentlichungstag und Bekanntmachung des Hinweises auf die Patenterteilung: **25.08.2004**
(21) Anmeldenummer: 02712953.5
(22) Anmeldetag: 21.03.2002
(51) Int. Cl.: F16L 3/00, F24D 3/14

(54) **BEFESTIGUNGSVORRICHTUNG ZUM BEFESTIGEN EINES ROHRES ODER EINER ROHRANORDNUNG ZWISCHEN BEWEHRUNGSLAGEN EINER BETONPLATTE**
FIXING DEVICE FOR FIXING A TUBE OR A TUBULAR ARRANGEMENT BETWEEN THE REINFORCEMENT LAYERS OF A CONCRETE PLATE
DISPOSITIF DE FIXATION DESTINE A LA FIXATION D'UN TUBE OU D'UN SYSTEME DE TUBES ENTRE DES COUCHES D'ARMATURES D'UNE DALLE EN BETON

(30) Priorität: 24.03.2001 DE 10114562
(43) Veröffentlichungstag der Anmeldung: 02.01.2004
(73) Patentinhaber: Uponor Innovation AB, 513 81 Fristad (SE)
(72) Erfinder: TERHAAR, Christian, 48683 Ahaus-Ottenstein (DE)
(74) Vertreter: Hilleringmann, Jochen, Dipl.-Ing.
(86) Internationale Anmeldenummer: PCT/EP2002/003177
(87) Internationale Veröffentlichungsnummer: WO 2002/077508

(56) Entgegenhaltungen:
- DE-C- 3 906 729
- FR-A- 2 350 717
- US-A- 3 207 463
- US-A- 5 385 320

## Beschreibung

Die Erfindung betrifft eine Befestigungsvorrichtung zum Befestigen eines Rohres oder einer Rohranordnung zwischen Bewehrungslagen einer Betonplatte.

Um die Eigenwärme von Gebäudeteilen nutzen zu können, ist es bekannt, beispielsweise in Betonplatten Rohre zu integrieren, um über durch die Rohre fließendes Medium der Betonplatte Wärme zu entziehen. Ein derartiger Aufbau ist aber auch geeignet, um die Betonplatte über das Medium zu erwärmen. Die verlegten Rohre sollten in etwa im mittleren Dickenerstreckungsbereich der Betonplatte angeordnet sein, um eine gleichmäßige Wärmeverteilung zu gewährleisten und somit Wärmespannungen zu vermeiden.

Bei der Herstellung einer Betonplatte, wie sie beispielsweise aus DE 39 06 729 C1 bekannt ist, wird das zu verlegende Rohr auf einem speziellen Haltegitter verlegt und dort befestigt. Die Bewehrung der Betonplatte wird hergestellt, indem zunächst auf eine untere Bewehrungslage, die zumeist die Form eines Gitters aufweist, das zuvor gefertigte Haltegitter mit verlegtem Rohr lose aufgelegt wird. Anschließend werden ebenfalls gitterförmige Abstandshalter auf der unteren Bewehrungslage aufgestellt, um auf diese Abstandshalter alsdann eine obere ebenfalls Gitterstruktur aufweisende Bewehrungslage zu legen. Im letzten Schritt wird dann das Haltegitter mit dem verlegten Rohr über Aufhängeelemente an der oberen Bewehrungslage aufgehängt, so dass die Ebene, in der die Rohre verlaufen, im wesentlichen in der Mitte der Betonplatte angeordnet ist. Die Rohre sind an ihrem Haltegitter gegen ein unbeabsichtigtes Ablösen durch Clipse o. dgl. gesichert, so dass das Rohr beim anschließenden Gießprozess nicht aufschwimmt und seine Position in etwa in der Mitte der Betonplatte beibehält.

Bei solchen Betonplatten mit integrierten Rohren müssen diese also von einem speziellen Trägerelement, im obigen Fall dem Haltegitter, gehalten werden. Dies erfordert zusätzlichen Materialeinsatz und verteuert daher die Herstellung der Betonplatte. Außerdem ist für die Befestigung des verlegten Rohres an dem Trägerelement zusätzlicher Montageaufwand erforderlich. Zusätzliche Trägerelemente sind aber auch dann erforderlich, wenn eine Rohrverlegeanordnung zur Flächentemperierung eingesetzt wird.

Die DE 198 32 289 C2 beschreibt ein Verfahren zur Herstellung einer Betondecke. Die Betondecke weist eine obere und eine untere Bewehrungslage auf, zwischen denen Abstandsblöcke mit Querträgern angeordnet sind. An diesen Querträgern wird mit Hilfe von Kabelbindern eine Trägermatte mit einer Rohranordnung befestigt, so dass ein Aufschwimmen der Rohranordnung beim Vergießen des Betons wirksam verhindert wird. Auch bei diesem Verfahren ist der Materialaufwand infolge des Vorsehens von Trägermaterial für die Rohre relativ hoch.

Ferner offenbart die DE 100 01 839 A1 eine Baustahlkonstruktion als Bewehrung für ein Betonplattenelement mit integrierten Heiz- oder Kühlrohren. Diese Konstruktion umfasst zwei Bewehrungsgitter, die durch eine Anzahl von länglichen Trägern voneinander beabstandet sind. Auf mittlerer Höhe der Träger sind jeweils Haltemittel, beispielsweise in Form von Längs- oder Querstreben, befestigt, an denen die Heiz- oder Kühlrohre mit Hilfe von Befestigungselementen angeordnet und gegen ein Aufschwimmen während des Vergießens des Betons gesichert sind. Die Heiz- oder Kühlrohre können nur entlang der Träger verlegt werden. Soll nämlich eine Mehrzahl von Rohren angeordnet werden, müssen auch entsprechend viele Träger vorgesehen werden, und zwar mehr, als zum Tragen des oberen Bewehrungsgitters erforderlich sind. Es kommt also zu einem unverhältnismäßig hohen Materialeinsatz, der die Herstellungskosten des Betonplattenelements erhöht. Ferner ist das Verlegen der Rohre entlang der Träger recht mühsam und zeitintensiv.

Schließlich offenbart die DE 40 18 632 A1 eine Baustahlkonstruktion für Betonfußböden mit einem oberen und einem unteren Bewehrungsgitter, zwischen denen ein Bewehrungskorb angeordnet ist, der als Abstandshalter zwischen den Gittern dient. Der Bewehrungskorb besteht aus einem oberen und einem unteren Stahlstab, die im wesentlichen wellenförmig verlaufen und durch starre Verbindungsstreben miteinander verbunden sind. An dem oberen Stahlstab ist mit Hilfe von Metallhaken ein Heizungsrohr auf mittlerer Höhe des Bewehrungskorbes befestigt und gegen ein Aufschwimmen während des Vergießens des Betons gesichert. Auch hier ist der Materialeinsatz relativ hoch.

FR 2 350 717 offenbart eine Befestigungsvorrichtung zum Aufhängen eines Rohres, diese Vorrichtung besteht aus mehreren unterschiedlichen Teilen.

Der Erfindung liegt die Aufgabe zu Grunde, ein einfacheres, schnelleres und preisgünstigeres Aufhängen eines Rohres oder einer Rohranordnung im mittleren Dickenerstreckungsbereich einer Betonplatte zu ermöglichen, wobei ein Aufschwimmen des Rohres bzw. der Rohranordnung während des Einbringens von Beton wirksam verhindert wird.

Zur Lösung dieser Aufgabe wird mit der Erfindung eine Befestigungsvorrichtung zum Befestigen eines Rohres oder einer Rohranordnung zwischen Bewehrungslagen einer Betonplatte geschaffen, wobei die Befestigungsvorrichtung versehen ist mit
- wenigstens zwei baugleichen Befestigungselementen, von denen jedes aufweist:
   - einen Steg, der ein vorderes und ein hinteres Ende umfasst,
   - wenigstens eine Öffnung und wenigstens einen Zapfen, die an dem Steg angeordnet sind,
   - einen ersten, im wesentlichen U- oder hakenförmigen, in Richtung des vorderen Endes des Steges offenen Ausleger, der am hinteren Ende des Steges befestigt und zum Sichern eines Rohres gegen unbeabsichtigtes Lösen vorgesehen ist, und
   - einen zweiten, im wesentlichen U- oder hakenförmigen, in Richtung des vorderen Endes des Steges offenen Ausleger, der am hinteren Ende des Steges befestigt, gegenüber dem ersten Ausleger angeordnet und zum Anhängen an Streben einer Bewehrungslage sowie zum Sichern gegen ein unbeabsichtigtes Lösen vorgesehen ist,
- wobei zum Fixieren der beiden Befestigungselemente aneinander der wenigstens eine Zapfen des Steges des einen Befestigungselements in die wenigstens eine Öffnung des Steges des anderen Befestigungselements und der wenigstens eine Zapfen des zweiten Steges in die wenigstens eine Öffnung des ersten Steges greift.

Ein Vorteil der erfindungsgemäßen Befestigungsvorrichtung besteht darin, dass mit ihr ein Rohr oder eine Rohranordnung an einer Bewehrungslage einer Betonplatte befestigt werden kann, ohne dass spezielle Trägerelemente, wie beispielsweise Haltegitter, erforderlich sind, die die Rohranordnung zusätzlich unterstützen. Dadurch kann Material eingespart werden, wodurch wiederum die Herstellungskosten gesenkt werden. Ein Aufschwimmen des Rohres oder der Rohranordnung während des Gießprozesses der Betonplatte wird wirksam durch die biegesteife Befestigungsvorrichtung gemäß der Erfindung verhindert. Durch die Verwendung von Gleichteilen, hier der baugleichen Befestigungselemente, werden sowohl die Herstellungs- als auch die Lagerkosten gesenkt. Ferner kann ein Rohr bzw. eine Rohranordnung mit Hilfe der erfindungsgemäßen Befestigungsvorrichtung schnell und einfach zwischen Bewehrungslagen einer Betonplatte verlegt werden, indem ein erstes und ein zweites der baugleichen, Befestigungselemente miteinander kraftschlüssig (Form- und/oder Reibschluss) verbunden werden, danach das anzuordnende Rohr bzw. die Rohranordnung jeweils in dem ersten Ausleger des ersten Befestigungselementes klemmend aufgenommen und anschließend der zweite Ausleger des zweiten Befestigungselementes in die obere Bewehrungslage eingehakt wird.

Vorzugsweise sind längs des Steges jedes Befestigungselementes mehrere Öffnungen ausgebildet, wobei die Öffnungen in gleichen Entfernungen voneinander beabstandet sind und miteinander fluchten. Durch eine entsprechende Paarung des Zapfens eines ersten Befestigungselementes mit einem der Löcher des zweiten Befestigungselementes kann somit die Gesamtlänge der aneinander befestigten Befestigungselemente und somit die Position des Rohres bzw. der Rohranordnung zwischen den Bewehrungslagen genau eingestellt werden. Auf diese Weise ist die erfindungsgemäße Befestigungsvorrichtung für unterschiedliche Betonplattendicken geeignet.

Der erste U- oder hakenförmige Ausleger ist vorzugsweise elastisch ausgebildet, so dass er bei der Aufnahme eines Rohres zurückfedern und bei angeordnetem Rohr eine Andrückkraft auf das Rohr ausüben und somit das Rohr klemmend halten kann.

Vorzugsweise ist auch der zweite U- oder hakenförmige Ausleger elastisch ausgebildet. Ferner wird dieser bevorzugt an Streben einer Bewehrungslage angehängt. Auf diese Weise wird eine einfache Anordnung des Befestigungselementes an einer Bewehrungslage ermöglicht.

Es ist weiterhin vorteilhaft, wenn das Befestigungselement einteilig ausgebildet ist, also nicht aus mehreren Teilen besteht, so dass keine Fügeoperationen erforderlich sind, wodurch auch die Fertigungskosten gesenkt werden.

Das Befestigungselement weist ferner vorzugsweise Kunststoff auf, da dieses Material leicht, preiswert und verhältnismäßig einfach zu verarbeiten ist.

Vorzugsweise handelt es sich bei dem Befestigungselement aufgrund der geringen Herstellungskosten um ein Spritzgussteil.

Es sei an dieser Stelle angemerkt, dass unter einer Zapfen-Loch-Verbindung der vorstehend beschriebenen Art im Rahmen der Erfindung jede Verbindung verstanden wird, bei der ein Vorsprung des einen Befestigungselementes in eine Vertiefung bzw. Aussparung des anderen Befestigungselementes greift und dort gegen ein unbeabsichtigtes Lösen kraftschlüssig (z. B. rastend oder durch Reibung) gehalten wird.

Im folgenden wird eine bevorzugte Ausführungsform der Befestigungsvorrichtung gemäß der vorliegenden Erfindung genauer unter Bezugnahme auf die Zeichnung beschrieben, wobei
- Fig. 1: eine schematische Querschnittansicht ist, die den Aufbau einer Bewehrung für einen Betonfußboden zeigt,
- Fig. 2: eine Draufsicht auf den Verlauf eines Rohres von selbsttragenden Rohrstrukturen ist, und
- Fig. 3: eine perspektivische Ansicht ist, die eine Befestigungsvorrichtung gemäß der vorliegenden Erfindung zeigt.

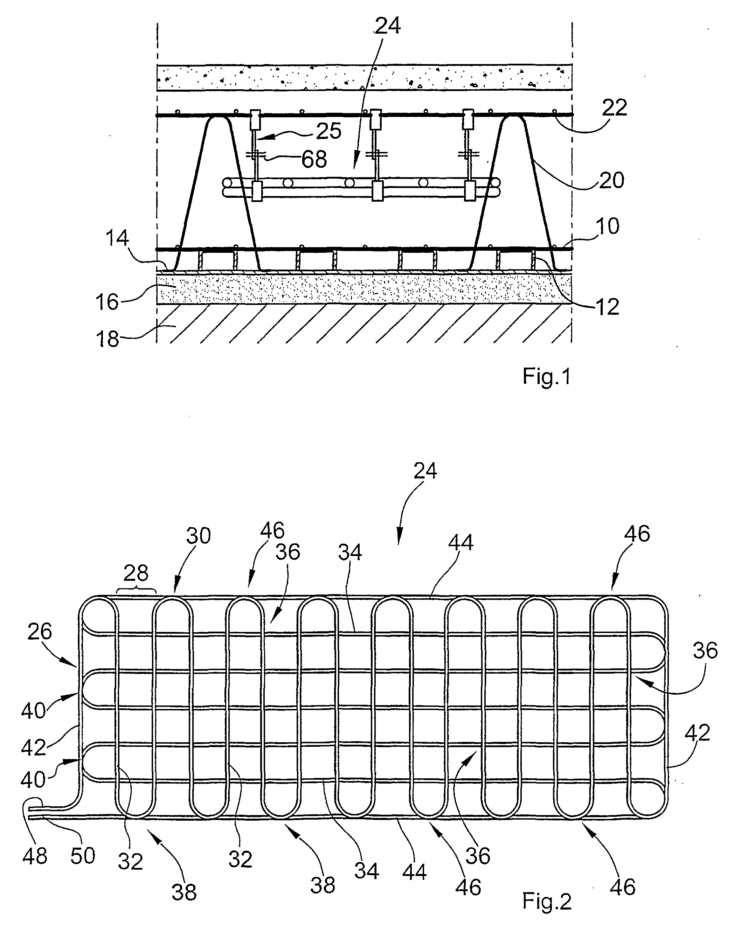

Fig. 1 zeigt einen Fußbodenaufbau mit Bewehrungskonstruktion für eine Betonplatte. Diese Bewehrungskonstruktion besteht aus einem unteren Bewehrungsgitter 10, das über Abstandshalter 12 auf einer Folie 14 aufliegt. Unterhalb der Folie 14 befindet sich ein Sandbett 16, das oberhalb des Untergrundes 18 angeordnet ist.

Auf der Folie 14 sind Abstandshalter 20 aufgestellt, auf denen ein oberes Bewehrungsgitter 22 aufliegt.

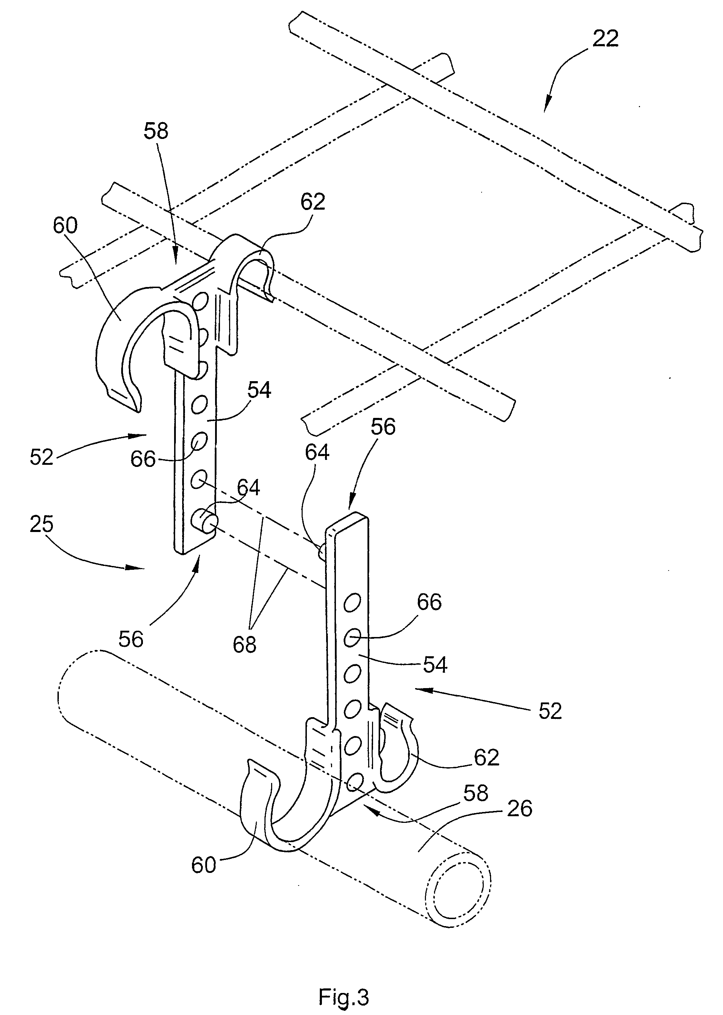

Im mittleren Bereich zwischen den beiden Bewehrungsgittern 10,22 ist eine Rohrverlegeanordnung 24 positioniert, die über Befestigungsvorrichtungen 25 zwischen den beiden Bewehrungsgittern 10,22 angeordnet ist. Die Befestigungsvorrichtungen 25 sind einerseits in das obere Bewehrungsgitter eingehängt und andererseits mit einem Rohr der Rohrverlegeanordnung 24 verhakt. Der genaue Aufbau der Befestigungsvorrichtung 25 wird weiter unten anhand der Fig. 3 beschrieben. Die Rohrverlegeanordnung 24 weist ein ineinander gewobenes Rohr 26 auf, wie es beispielhaft in Fig. 2 gezeigt ist. Als Rohr 26 wird beispielsweise ein eine Metallschicht aufweisendes Kunststoffrohr eingesetzt. Mit einem solchen plastisch verformbaren Rohr 26 kann man beliebig große Rohrverlegeanordnungen 24 bzw. Module vorfertigen. Außerdem lassen sich beliebige Maschenweiten 28 je nach Rohrdimension problemlos realisieren. Die Maschenweite 28 hängt im wesentlichen vom Biegeradius in den Bereichen 30 des Rohres 26 ab.

Gemäß Fig. 2 weist die Rohrverlegeanordnung 24 eine erste Gruppe von geradlinigen ersten Rohrabschnitten 32, die untereinander parallel verlaufen, und eine zweite Gruppe von ebenfalls geradlinigen zweiten Rohrabschnitten 34 auf, die ebenfalls geradlinig verlaufen und die ersten Rohrabschnitte zur Bildung von Kreuzungspunkten 36 kreuzen. An diesen Kreuzungspunkten 36 sind die ersten Rohrabschnitte 32, die ober- oder unterhalb der zweiten Rohrabschnitte 34 verlaufen, an den zweiten Rohrabschnitten 34 mittels (nicht dargestellter) Verbindungselemente (z. B. Clipse, Kabelbinder) fixiert. Zwischen benachbarten ersten bzw. zweiten Rohrverbindungsabschnitten 32,34 befinden sich Rohrbogenabschnitte 38,40. Die ersten und die zweiten Rohrbogenabschnitte 38,40 sind jeweils nach Art von (Einzel-) Mäanderstrukturen ausgebildet, wobei beide Mäanderstrukturen um 90° zueinander verdreht und übereinanderliegend oder miteinander verwoben sind. Der Begrenzungsrand der Rohrverlegeanordnung ist durch einzelne geradlinige Rohrabschnitte 42,44 gebildet, von denen jeweils zwei parallel zu den ersten bzw. zweiten Rohrabschnitten 32,34 verlaufen. Diese (Rand-) Rohrabschnitte 42,44 sind in den Scheitelpunkten 46 der Rohrbogenabschnitte 38,40 an diesen fixiert, und zwar ebenfalls durch z. B. Kabelbinder (d. h. separate Verbindungselemente).

Fig. 3 ist eine perspektivische Ansicht und zeigt einen Teilausschnitt der in Fig. 1 dargestellten Bewehrungskonstruktion. Diese Konstruktion umfasst das obere Bewehrungsgitter 22, das Rohr 26 der Rohrverlegeanordnung 24 und die Befestigungsvorrichtung 25, die hier aus zwei miteinander verbundenen Befestigungselementen 52 besteht. Wie zu erkennen ist, sind die beiden biegesteifen Befestigungselemente 52 baugleich. Sie umfassen jeweils einen Steg 54 mit einem vorderen Ende 56 und einem hinteren Ende 58. Am hinteren Ende 58 des Steges 54 ist ein im wesentlichen hakenförmiger, in Richtung des vorderen Endes 56 des Steges 54 offener Ausleger 60 einteilig mit dem Steg 54 ausgebildet. Dem ersten Ausleger 60 gegenüber ist ein zweiter Ausleger 62 am hinteren Ende 58 einteilig mit dem Steg 54 ausgebildet. Auch dieser weist im wesentlichen die Form eines Hakens auf und ist in Richtung des vorderen Endes 56 des Steges 54 offen. Am vorderen Ende 56 ist an einer Seite des Steges 54 ein Zapfen ausgebildet. Längs des Steges 54 jedes Befestigungselementes 25 sind mehrere Öffnungen 66 unterhalb des Zapfens 64 angeordnet, wobei die Öffnungen in gleichen Entfernungen voneinander beabstandet sind und miteinander fluchten. Wie es in Fig. 3 durch die gestrichelten Linien 68 dargestellt ist, werden die Zapfen 64 der jeweiligen Befestigungselemente 52 mit einer entsprechenden Öffnung 66 des anderen Befestigungselementes 52 gepaart, wodurch die Befestigungselemente 52 zueinander ausgerichtet und gleichzeitig aneinander befestigt werden. Ein erster Ausleger 60 der so erzeugten Befestigungsvorrichtung 25 nimmt, wie es in Fig. 3 gezeigt ist, ein Rohr 26 der in den Fign. 1 und 2 dargestellten Rohrverlegeanordnung 24 klemmend auf, während ein zweiter Ausleger der Befestigungsvorrichtung 25 in das obere Bewehrungsgitter eingehängt wird. Auf diese Weise kann die Rohrverlegeanordnung 24 zwischen dem oberen und dem unteren Bewehrungsgitter 22,10 angeordnet werden, wie es in Fig. 1 zu erkennen ist.

Durch eine entsprechende Wahl der Zapfen/Loch-Anordnung kann die Gesamthöhe der Befestigungsvorrichtung 25 und somit die genaue Position der Rohrverlegeanordnung 24 zwischen den oberen und unteren Bewehrungsgittern 22,10 wunschgemäß eingestellt werden.

## Patentansprüche

1. Befestigungsvorrichtung zum Befestigen eines Rohres (26) oder einer Rohranordnung (24) zwischen Bewehrungslagen (10,22) einer Betonplatte, wobei die Befestigungsvorrichtung versehen ist mit
- wenigstens zwei baugleichen Befestigungselementen (52), von denen jedes aufweist:
- einen Steg (54), der ein vorderes und ein hinteres Ende (56,58) umfasst,
- wenigstens eine Öffnung (66) und wenigstens einen Zapfen (64), die an dem Steg (54) angeordnet sind,
- einen ersten, im wesentlichen U- oder hakenförmigen, in Richtung des vorderen Endes (56) des Steges (54) offenen Ausleger (60), der am hinteren Ende (58) des Steges (54) befestigt und zum Sichern eines Rohres gegen unbeabsichtigtes Lösen vorgesehen ist, und
- einen zweiten, im wesentlichen U- oder hakenförmigen, in Richtung des vorderen Endes (56) des Steges (54) offenen Ausleger (62), der am hinteren Ende des Steges (54) befestigt, gegenüber dem ersten Ausleger (60) angeordnet und zum Anhängen an Streben einer Bewehrungslage (22) sowie zum Sichern gegen ein unbeabsichtigtes Lösen vorgesehen ist,
- wobei zum Fixieren der beiden Befestigungselemente (52) aneinander der wenigstens eine Zapfen (64) des Steges (54) des einen Befestigungselements (52) in die wenigstens eine Öffnung (66) des Steges (54) des anderen Befestigungselements (52) und der wenigstens eine Zapfen (64) des zweiten Steges (54) in die wenigstens eine Öffnung (66) des ersten Steges (54) greift.

2. Befestigungsvorrichtung nach Anspruch 1, **dadurch gekennzeichnet, dass** längs des Steges (54) jedes Befestigungselementes (52) mehrere Öffnungen (66) ausgebildet sind, wobei die Öffnungen (66) in gleichen Entfernungen voneinander beabstandet sind und miteinander fluchten.

3. Befestigungsvorrichtung nach einem der vorhergehenden Ansprüche, **dadurch gekennzeichnet, dass** der erste U- oder hakenförmige Ausleger (60) elastisch ausgebildet ist.

4. Befestigungsvorrichtung nach einem der vorhergehenden Ansprüche, **dadurch gekennzeichnet, dass** der erste U- oder hakenförmige Ausleger (60) zum klemmenden Halten eines Rohres vorgesehen ist.

5. Befestigungsvorrichtung nach einem der vorhergehenden Ansprüche, **dadurch gekennzeichnet, dass** der zweite U- oder hakenförmige Ausleger. (62) elastisch ausgebildet ist.

6. Befestigungsvorrichtung nach einem der vorhergehenden Ansprüche, **dadurch gekennzeichnet, dass** der zweite U- oder hakenförmige Ausleger (62) zum klemmenden Anhängen an Streben einer Bewehrungslage vorgesehen ist.

7. Befestigungsvorrichtung nach einem der vorhergehenden Ansprüche, **dadurch gekennzeichnet, dass** das Befestigungselement (52) einteilig ausgebildet ist.

8. Befestigungsvorrichtung nach einem der vorhergehenden Ansprüche, **dadurch gekennzeichnet, dass** das Befestigungselement (52) Kunststoff aufweist.

9. Befestigungsvorrichtung nach einem der vorhergehenden Ansprüche, **dadurch gekennzeichnet, dass** es sich beim dem Befestigungselement (52) um ein Spritzgussteil handelt.

## Claims

1. Fastening device for fastening a tube (26) or a tubular assembly (24) between reinforcement means (10,22) of a concrete slab, wherein the fastening device is provided with
- at least two fastening elements (52) identical in construction, each comprising:
- a web (54) having a front and a rear end (56,58),
- at least one opening (66) and at least one pin (64), which are arranged at the web (54),
- a first essentially U-shaped or hook-shaped bracket (60) open towards the front end (56) of the web (54), the bracket (60) being fastened to the rear end (58) of the web (54) and serving for securing a tube against unintentional unfastening, and
- a second essentially U-shaped or hook-shaped bracket (62) open towards the front end (56) of the web (54), the bracket (62) being fastened to the rear end of the web (54), arranged opposite the first bracket (60) and provided for being attached to rods of a reinforcement means (22) and for securing against unintentional unfastening,
- wherein, for fixing the two fastening elements (52) to each other, the at least one pin (64) of the web (54) of the one fastening element (52) engages in the at least one opening (66) of the web (54) of the other fastening element (52), and the at least one pin (64) of the second web (54) engages in the at least one opening (66) of the first web (54).

2. Fastening device according to claim 1, **characterized in that** along the web (54) of each fastening element (52) a plurality of openings (66) are provided, wherein the openings (66) are equidistant to each other and are aligned with each other.

3. Fastening device according to one of the preceding claims, **characterized in that** the first U-shaped or hook-shaped bracket (60) is of elastic configuration.

4. Fastening device according to one of the preceding claims, **characterized in that** the first U-shaped or hook-shaped bracket (60) serves for clampingly holding a tube.

5. Fastening device according to one of the preceding claims, **characterized in that** the second U-shaped or hook-shaped bracket (62) is of elastic configuration.

6. Fastening device according to one of the preceding claims, **characterized in that** the second U-shaped or hook-shaped bracket (62) is provided for being clampingly attached to rods of a reinforcement means.

7. Fastening device according to one of the preceding claims, **characterized in that** the fastening element (52) is configured in one piece.

8. Fastening device according to one of the preceding claims, **characterized in that** the fastening element (52) comprises plastic material.

9. Fastening device according to one of the preceding claims, **characterized in that** the fastening element (52) is an injection-molded component.

## Revendications

1. Dispositif de fixation pour fixer un tube (26) ou un système de tubes (24) entre des couches d'armatures (10, 22) d'une dalle en béton, ledit dispositif de fixation étant pourvu d'au moins deux éléments de fixation (52) de réalisation identique, parmi lesquels, chacun comprend :
-- une barrette (54) qui comprend une extrémité avant et une extrémité arrière (56, 58),
-- au moins une ouverture (66) et au moins un tenon (64), lesquels sont agencés sur la barrette (54),
-- un premier bras (60) essentiellement en forme de U ou de crochet, ouvert en direction de l'extrémité avant (56) de la barrette (54), qui est fixé à l'extrémité arrière (58) de la barrette (54) et qui est prévu pour bloquer un tube à l'encontre d'un détachement inopiné, et
-- un second bras (62) essentiellement en forme de U ou de crochet, ouvert en direction de l'extrémité avant (56) de la barrette (54), qui est fixé à l'extrémité arrière de la barrette (54) à l'opposé du premier bras (60), et qui est prévu pour l'accrochage sur les entretoises d'une couche d'armature (22) ainsi que pour le blocage à l'encontre d'un détachement inopiné,
dans lequel pour fixer les deux éléments de fixation (52) l'un à l'autre, ledit au moins un tenon (64) de la barrette (54) de l'un des éléments de fixation (52) s'engage dans ladite au moins une ouverture (66) de la barrette (54) de l'autre élément de fixation (52), et ledit au moins un tenon (64) de la seconde barrette (54) s'engage dans ladite au moins une ouverture (66) de la première barrette (54).

2. Dispositif de fixation selon la revendication 1, **caractérisé en ce que**, le long de la barrette (54) de chaque élément de fixation (52), sont réalisées plusieurs ouvertures (66), lesdites ouvertures (66) étant disposées aux mêmes distances les unes des autres, et étant alignées les unes avec les autres.

3. Dispositif de fixation selon l'une des revendications précédentes, **caractérisé en ce que** le premier bras en forme de U ou de crochet (60) est réalisé élastique.

4. Dispositif de fixation selon l'une des revendications précédentes, **caractérisé en ce que** le premier bras en forme de U ou de crochet (60) est prévu pour maintenir un tube par coincement.

5. Dispositif de fixation selon l'une des revendications précédentes, **caractérisé en ce que** le second bras en forme de U ou de crochet (62) est réalisé élastique.

6. Dispositif de fixation selon l'une des revendications précédentes, **caractérisé en ce que** le second bras en forme de U ou de crochet (62) est prévu pour être suspendu par coincement sur des entretoises d'une couche d'armatures.

7. Dispositif de fixation selon l'une des revendications précédentes, **caractérisé en ce que** l'élément de fixation (52) est réalisé d'une seule pièce.

8. Dispositif de fixation selon l'une des revendications précédentes, **caractérisé en ce que** l'élément de fixation (52) comprend de la matière plastique.

9. Dispositif de fixation selon l'une des revendications précédentes, **caractérisé en ce que** l'élément de fixation (52) est une pièce coulée par injection.
